# EUROPÄISCHE PATENTSCHRIFT

(11) **EP 0 573 064 B1**
(45) Veröffentlichungstag und Bekanntmachung des Hinweises auf die Patenterteilung: **27.08.1997**
(21) Anmeldenummer: 93109031.0
(22) Anmeldetag: 04.06.1993
(51) Int. Cl.: H01M 2/10

(54) **Akkumulator mit klappbarem Traggriff**
Accumulator with a fold-away handle
Accumulateur avec poignée rabattable

(30) Priorität: 04.06.1992 DE 9207599 U
(43) Veröffentlichungstag der Anmeldung: 08.12.1993
(73) Patentinhaber: HAGEN BATTERIE AG, D-59494 Soest (DE)
(72) Erfinder: Nann,Eberhard Dr., D-59494 Soest-Deiringsen (DE); Wulf,Ulrich, D-59494 Soest (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-C- 627 030
- DE-U- 9 207 599
- GB-A- 2 205 436
- US-A- 3 128 905
- US-A- 3 302 826
- US-A- 4 142 660
- US-A- 4 157 763
- US-A- 4 752 543

## Beschreibung

Die Erfindung betrifft einen Akkumulator gemäß dem Oberbegriff des Patentanspruches 1.

Akkumulatoren sind im allgemeinen sehr schwer und aus diesem Grund nicht leicht handzuhaben.

Daher sind Akkumulatorbatterien (DE 37 34 283 C2) schon mit Griffbügeln versehen worden, die bei Nichtbenutzung in die Oberfläche einer Abdeckplatte versenkbar sind und bei Benutzung aus Ihrer Ruheposition in die Tragposition geschwenkt werden können.

Die bekannte Anordnung hat jedoch den Nachteil, daß zum einen eine spezielle Vorrichtung zum Verschweißen oder Verkleben benötigt wird, so daß die Montage schwierig ist, und zum anderen Griffbügel auch dann vorhanden sind, wenn sie gar nicht gebraucht werden.

Nach der US-A-4157763 werden bei einem Projektorgehäuse oder dgl. Eingriffsanordnungen eines Traggriffs in am Gehäuse vorgesehene Aufnahmevorrichtungen eingeführt, woraufhin der Traggriff in eine aufrechte Stellung geschwenkt wird.

Ein gattungsgemäßer Akkumulator ist aus der GB-A-2205436 bekannt. Der bekannte Akkumulator weist einen Deckel und einen U-förmigen Traggriff auf. Im Deckel sind Ausnehmungen ausgebildet, die nach oben von Flanschen teilweise derart verschlossen sind, daß zwischen den Flanschen Einführspalte vorliegen. Der Traggriff weist jeweils am unteren Ende seiner Arme eine Eingriffsanordnung auf, die aus einem länglichen Vorsprung und einer der Form der Ausnehmungen im Deckel entsprechenden Scheibe besteht. Der Traggriff wird in einer Stellung mit zum Deckel paralleler Griffebene über seine Eingriffsanordnungen in die Ausnehmung eingesetzt, indem die Vorsprünge durch die Einführspalte hindurchgeführt werden. Anschließend wird der Traggriff um 90° gedreht und auf diese Weise in eine aufrechte Stellung gebracht.

Der Erfindung liegt die Aufgabe zugrunde, einen Akkumulator der eingangs genannten Gattung zu schaffen, bei welchem ein schwenkbar befestigter Traggriff leicht anbringbar ist und ein sicheres Tragen des Akkumulators ermöglicht wird.

Diese Aufgabe wird durch die Merkmale des kennzeichnenden Teils des Patentanspruchs 1 gelöst.

Auf diese Weise ist es möglich, jeden Traggriff leicht, insbesondere von Hand, nach der Fertigstellung des Akkumulators in die Scharniermittelhalterung einzuführen und ihn bei Bedarf auch wieder abzunehmen. Somit kann ein und derselbe Akkumulatortyp sowohl mit als auch ohne Traggriff ausgestattet werden. Weiter können die Traggriffe nach einmaligem Gebrauch abgenommen und weggeworfen oder für einen späteren Zweck aufbewahrt werden. Schließlich kann - z. B. in Werkstätten - mittels nur eines Traggriffpaares eine Fülle von erfindungsgemäß ausgestatteten Akkumulatoren nacheinander gehandhabt werden. Die Erfindung eröffnet also vielfältige Verwendungsmöglichkeiten.

Im Unterschied zu dem gattungsgemäßen Stand der Technik sind bei dem erfindungsgemäßen Akkumulator der Einführungsbereich und der Tragbereich räumlich voneinander getrennt und durch einen Durchgriffschlitz miteinander verbunden, in dessen Nuten das Scharniermittel des Traggriffs zwischen Einführungsbereich und Tragbereich verschiebbar ist. Es wird somit auch in vorteilhafter Weise die Gewichtskraft des Akkumulators von einem Tragbereich aufgenommen, der vom Einführungsbereich räumlich getrennt ist. Die Gefahr des Herausbrechens von Deckelteilen und des unbeabsichtigten Lösens des Traggriffs vom Akkumulatordeckel ist deshalb eliminiert, zumal der Tragbereich im Gegensatz zum Einführungsbereich nicht mit der Aufnahme des Scharniermittels ermöglichenden Einführöffnungen oder dergleichen versehen sein muß, die eine unvermeidbare strukturelle Schwächung der umgebenden Deckelbereiche bedeuten.

In einer weiteren vorteilhaften Ausführungsform wird der Traggriff im Tragbereich durch eine Rastvorrichtung schwenkbar gehalten und durch Einrasten gegen Verschieben gesichert. Gegen einen geringen Widerstand ist es möglich, den Traggriff im Tragbereich zu positionieren und ihn auch wieder zu entfernen. Besonders einfach und kostengünstig wird die Rastvorrichtung durch eine im Tragbereich, an der oberen und/oder unteren Nutwand angeordnete Erhöhung gebildet.

In einer weiteren vorteilhaften Ausführungsform erfolgt die Sicherung gegen eine Verschiebung des Traggriffs mittels einer Verriegelungsvorrichtung, welche sich zusammensetzt aus Verriegelungsmitteln und Verriegelungsgegenmitteln. In einer vorzugsweisen Ausführungsform wird das Verriegelungsgegenmittel durch eine im wesentlichen zylindrische Ausnehmung gebildet, welche mit den dazu komplementären Verriegelungsmitteln zusammenwirkt, um den Traggriff in einer oder mehreren Positionen zu verriegeln und in zumindest einer Position zu entriegeln. In der Entriegelungsstellung kann der Traggriff über den Einführbereich in den Deckel eingeschoben und bis zu einer Wand verschoben werden. Ist der Traggriff vollständig eingeführt, so kann dieser durch Schwenken in vorzugsweise mehrere, verschiedene Verriegelungspositionen gebracht werden, z.B. in die Ruheposition oder in Tragpositionen, in denen er nicht mehr verschoben sondern nur noch geschwenkt werden kann. Als Tragposition kann dabei vorzugsweise sowohl eine vertikale Stellung der Traggriffe gewählt werden, in der im Falle von zwei Traggriffen beide mit jeweils einer Hand erfaßt werden können, oder eine andere Stellung, in der beide Traggriffe von einer einzigen Hand erfaßt werden können. Entscheidend hierbei ist beispielsweise, ob man sich mit einer Hand abstützen muß und somit für die Tragarbeit nur eine einzige Hand zur Verfügung steht oder ob eine große Kraft mittels zweier Hände zum Tragen oder Heben des Akkumulators benötigt wird.

Mit Hilfe der Rast- bzw. der Verriegelungsvorrichtung wird sichergestellt, daß der Traggriff nicht zufällig oder ungewollt aus dem Tragbereich gleitet und somit beispielsweise über den Deckelrand übersteht oder gar verlorengeht.

In einer weiteren vorteilhaften Ausführungsform besteht der Traggriff aus einem Tragkraftübertragungsmittel an dessen Enden T-förmig ein Griffelement bzw. ein Paar von Tragbolzen vorgesehen sind. Zur Aufnahme der Bolzen sind beidseitig des Durchtrittsschlitzes symmetrisch einander gegenüber angeordnete Nuten vorhanden. Diese Ausführungsform des Traggriffes ermöglicht eine besonders kostengünstige und einfache Produktion.

Da Akkumulatoren oftmals auf beschränktem Raum oder nebeneinander untergebracht werden sollen, sieht eine vorteilhafte Ausbildung des Deckels vor, daß der Tragegriff in der Ruheposition in den Deckel versenkt werden kann. Auch der Tragesteg des Tragegriffs soll vorzugsweise nicht über den Deckel nach oben vorstehen.

In einer weiteren vorteilhaften Ausführungsform befinden sich in der Ruheposition Teile des Traggriffs in Eingriff mit Seitenwänden des Deckels, so daß ein fester Sitz des Traggriffs erreicht wird. Damit wird ein zufälliges oder ungewolltes aufklappen des Traggriffs verhindert und dieser in der Ruheposition gehalten.

In einer weiteren vorteilhaften Ausführungsform werden die Griffelemente derart an dem Rand des Deckels angeordnet, daß sie ohne Schwierigkeiten mit der Hand von der Seite leicht erfaßbar sind.

Ergänzend dazu, daß die Verriegelungsmittel die Verriegelungsfunktion übernehmen, können sie auch zusätzlich zu den Scharniermitteln zur Tragfunktion herangezogen werden. Bei in Tragstellung befindlichem Traggriff untergreifen die Verriegelungsmittel Teile des Deckels und stützen sich bei der Tragfunktion dagegen ab. In einer Fortführung dieses Gedankens übernehmen in einer weiteren vorteilhaften Ausführungsform die Verriegelungsmittel vollständig die Funktion des Scharniermittels und treten an dessen Stelle. Damit können in einer Vorrichtung die Funktionen von zwei Vorrichtungen vereinigt werden.

Diese und weitere vorteilhafte Ausführungsformen sind in den Unteransprüchen definiert.

Die Erfindung wird nachfolgend anhand der Zeichnung beispielsweise näher erläutert; in dieser zeigt:
- Fig. 1: eine Seitenansicht eines erfindungsgemäßen Akkumulators,
- Fig. 2: eine Draufsicht des Akkumulators mit einer Rasterhöhung, jedoch ohne die Traggriffe,
- Fig. 3: eine vergrößerte Teilschnittansicht des Akkumulators nach Linie III-III in Fig. 2, wobei zusätzlich der im Deckel angeordnete Traggriff dargestellt ist,
- Fig. 4: eine vergrößerte Teilschnittansicht des Deckels nach Linie IV-IV in Fig. 2,
- Fig. 5: eine Draufsicht des Traggriffs des Akkumulators nach Fig. 1 - 4,
- Fig. 6: eine Seitenansicht des Traggriffs nach Fig. 5,
- Fig. 7: eine Draufsicht des Akkumulators mit einer Verriegelungsöffnung, jedoch ohne die Traggriffe,
- Fig. 8: eine vergrößerte Teilschnittansicht des Akkumulators nach Linie VIII-VIII in Fig. 7, wobei zusätzlich der im Deckel angeordnete Traggriff in verschiedenen Schwenkpositionen dargestellt ist,
- Fig. 9: eine vergrößerte Teilschnittansicht des Deckels nach Linie IX-IX in Fig. 7,
- Fig. 10: eine Draufsicht des Traggriffs des Akkumulators nach Fig. 7 - 9 mit Verriegelungselementen und
- Fig. 11: eine Seitenansicht des Tragegriffs nach Fig. 10.

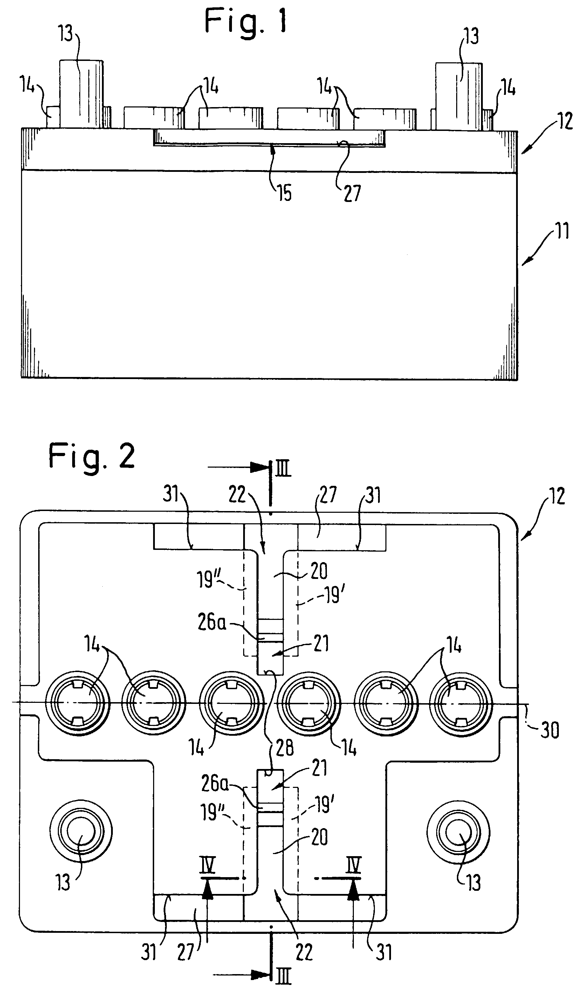

Nach den Figuren 1 und 2 ist ein Gehäuse 11 eines Akkumulators durch einen Deckel 12 oben verschlossen. Zwei Anschlußpole 13, welche in den Eckbereichen einer Längsseite des Dekkels 12 auf diesem angeordnet sind, erstrecken sich bis ins Innere des Gehäuses 11 und dienen dem Anschluß an Elektrodenplatten (nicht dargestellt). Weiterhin sind mittig über die Länge des Deckels 12 in bestimmten Abständen voneinander den Deckel 12 von oben nach unten durchbrechende Entgasungs- und/oder Nachfüllöffnungen 14 vorgesehen, über welche im Akkumulator entstehende Gase an die Umgebung abgeführt werden können und/oder destilliertes Wasser in einzelne Zellen des Gehäuses 12 nachgefüllt werden kann.

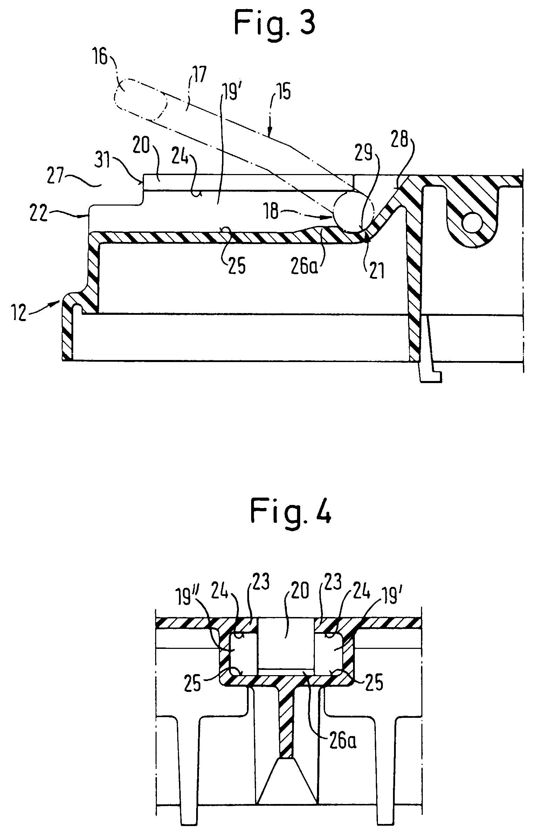

In der Oberfläche des Deckels 12 sind zwei bezüglich einer Mittellängsachse 30 spiegelbildliche Vertiefungen vorgesehen, die aus jeweils einer parallel zu einer Längskante verlaufenden und an diese angrenzenden, länglichen Ausnehmung 27 und einen sich von deren Mitte in Richtung auf die Mittellängsachse 30 und bis kurz vor diese ersteckenden Durchtrittsschlitz 20 besteht, der an einer schräg von innen nach außen verlaufenden Wand 28 endet (siehe auch Fig. 3). Die Ausnehmungen 27 sind wesentlich kürzer als die Längskanten und um deren Mitte herum angeordnet.

In den seitlichen Wänden des Durchtrittsschlitzes 20 befinden sich gemäß Fig. 2, 3 und 4 von der Oberfläche des Dekkels 12 durch Tragstege 23 getrennt, zum Durchtrittsschlitz 20 hin offene Nuten 19', 19'', die nahe der Mittellängsachse 30 an einer Krümmung 29 enden, sich in Richtung der zugeordneten Längskante bis zur seitlichen Begrenzung des Deckels 12 erstrecken und eine obere und untere Nutwand 24 bzw. 25 aufweisen.

In einer ersten Ausführungsform (Fig. 1 bis 6) weist die untere Wand 28 in einem geringen Abstand vor der Krümmung 29 eine Rasterhöhung 26a auf.

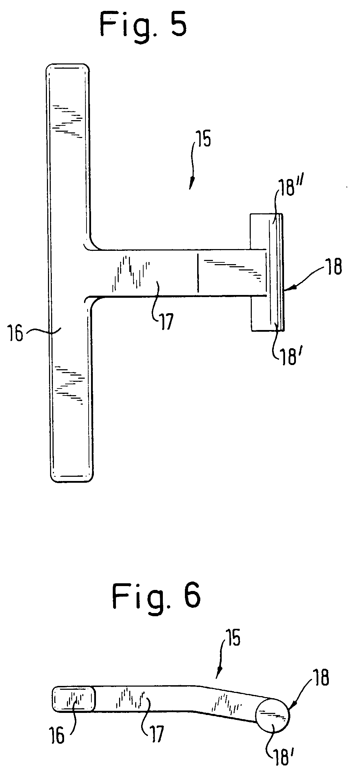

In den Durchtrittsschlitz 20 und die Nuten 19', 19'' ist nach Fig. 3 ein Traggriff 15 eingesetzt, der nach den Fig. 5 und 6 aus einem Tragkraftübertragungssteg 17, welcher in Form einer Stange mit Rechteckquerschnitt ausgebildet ist, einem an dessen einen Ende vorgesehenem Scharniermittel 18 und einem an dessen anderem Ende angeordnetem Griffelement 16 besteht. Das Scharniermittel 18 weist zwei seitliche, miteinander ausgerichtete Tragbolzen 18' und 18'' auf, die sich vom Steg 17 rechtwinklig in entgegengesetzte Richtung erstrecken. Der Durchmesser der Tragbolzen 18, 18' entspricht dem Abstand zwischen oberer und unterer Nutwand 24 bzw. 25, so daß die Tragbolzen 18', 18'' von den Nuten 19', 19'' aufgenommen werden können. Der Durchtrittsschlitz 20 ist geringfügig breiter dimensioniert als die Breite des Tragkraftübertragungsstegs 17.

Die nahe der Mittellängsachse 30 liegenden Enden des Durchtrittsschlitzes 20 und der Nuten 19', 19'' bilden einen Tragbereich 21, während die äußeren Enden einen Einführungsbereich 22 definieren.

Zum Einsetzen des Traggriffes 15 in den Deckel 12 werden nun die Bolzen 18', 18'' von der Seite her durch den Einführungsbereich 22 in die Nuten 19', 19'' eingeführt und zunächst bis zur Erhöhung 26 widerstandslos verschoben, wobei der Tragkraftübertragungssteg 17 in den Durchtrittsschlitz 20 eintritt.

Gegen einen bestimmten elastischen Widerstand ist es möglich, das Scharniermittel 18 über die Erhöhung 26a zu schieben, wodurch es in den Tragbereich 21 gelangt und von der unteren Nutwand 25, der oberen Nutwand 24, der komplementär zu dem Durchmesser der Tragbolzen 18', 18'' ausgebildeten Krümmung 29 und der Erhöhung 26a verrastet und schwenkbar gehalten wird.

In der Ruheposition sind die Traggriffe 15 in den Deckel 12 geklappt, wobei die Ausnehmung 27 den Griff 16 und der Durchtrittsschlitz 20 den Tragkraftübertragungssteg 17 so vollständig aufnehmen, daß diese den Deckel 12 nicht überragen. Durch den Einführungsbereich 22 kann das Griffelement 16 ergriffen und bis zur Wand 28 in Tragpositionen verschwenkt werden. Dadurch, daß die Wand 28 schräg ausgebildet ist, können beide Traggriffe 15 mit den Griffelementen 16 in Berührung gebracht und so mit einer Hand ergriffen werden. Wahlweise können beide Traggriffe 15 auch in eine senkrechte Position gebracht und mit beiden Händen erfaßt werden.

Das Entfernen des Traggriffes 15 geht in umgekehrter Reihenfolge vor sich. Es muß wiederum der Rastwiderstand überwunden werden, um die Tragbolzen 18', 18'' über die Erhöhung 26a zu bewegen. Danach kann der Traggriff 15 durch die Nuten 19', 19'' mühelos vom Deckel 12 entfernt werden.

In der Ruheposition werden die Traggriffe 15 über die Griffelemente 16, die durch Eingriff mit Seitenwänden 31 des Dekkels 12 einem festen Sitz haben, gesichert. Dadurch können die Traggriffe nicht unbeabsichtigt in die Höhe geklappt werden.

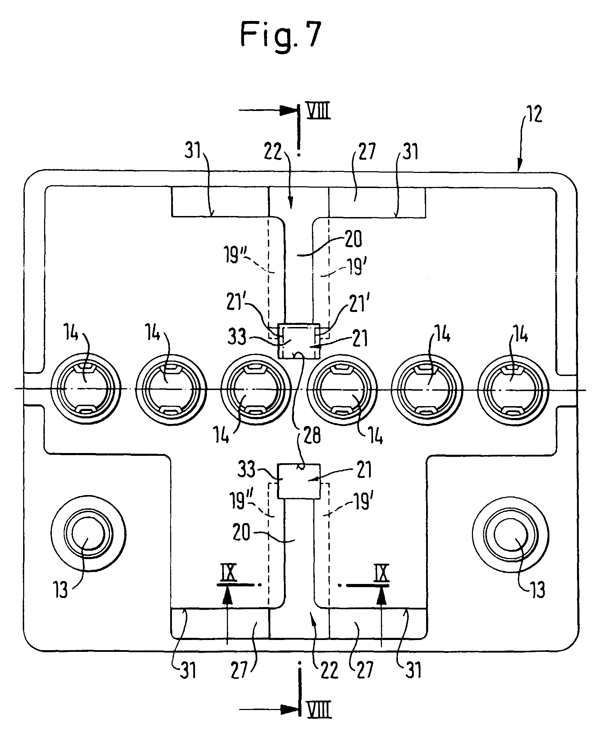

In einer zweiten Ausführungsform des Akkumulators, welche in den Figuren 7 bis 11 dargestellt ist, tritt anstelle der Rastvorrichtung, die durch die Tragbolzen 18', 18'' und die Rasterhöhung 26a gebildet ist, eine Verriegelungsvorrichtung, die in im folgenden, im einzelnen zu beschreibender Weise durch Verriegelungsmittel 32 und Verriegelungsgegenmittel 26b, 33 realisiert ist.

Eine im wesentlichen zylindrische Ausnehmung 26b ist an den inneren Enden des Durchtrittsschlitzes 20 und der Nuten 19', 19'' mittig angeordnet. Ihre Achse verläuft parallel zur Mittellängsachse 30 des Akkumulators und fällt mit der Achse der Tragbolzen 18', 18'' zusammen. Ihre Breite ist kleiner als die Gesamtbreite des Scharniermittels 18. Nach oben geht die zylindrische Ausnehmung 26b in eine Öffnung 33 (siehe Fig. 7) über, welche die Tragstege 23 durchbricht. Seitlich geht sie in den Durchtrittsschlitz 20 und die Nuten 19', 19'' über.

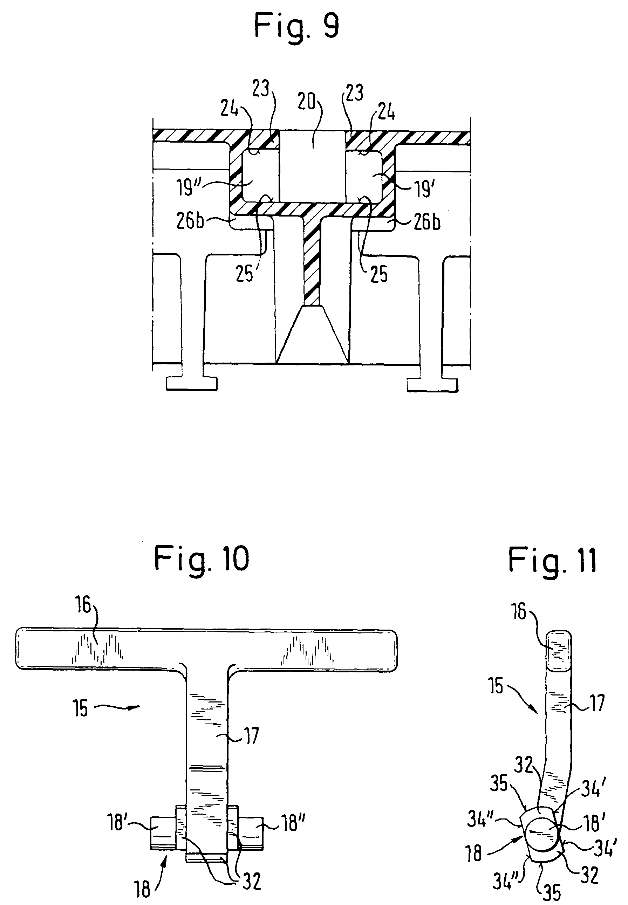

Am Scharniermittel 18 des Traggriffes 15 sind Verriegelungsmittel 32 angeordnet (siehe Fig. 10 und 11), welche die Form zweier diametral gegenüberliegender, radial außen einen teilzylindrischen Rand 35 aufweisender, radialer Vorsprünge haben. Die Vorsprünge umfassen jeweils zwei parallele, radial und axial ausgerichtete Ebenen 34' und 34'', welche den gleichen Abstand aufweisen, wie die obere und die untere Nutwand 24 bzw. 25. Der Rand 35 hat den gleichen Radius wie die zylindrische Ausnehmung 26b.

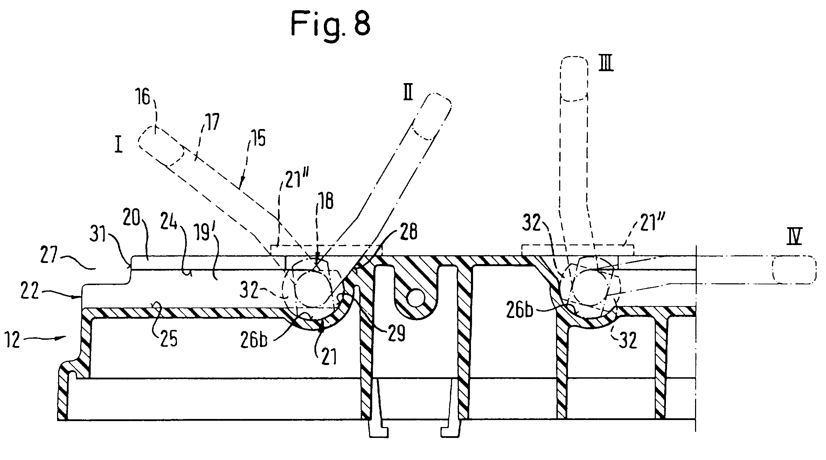

Wird nun der Traggriff 15 in der Entriegelungsposition (I) über den Einführbereich 21 in den Deckel 12 eingebracht (siehe Fig. 8), so nehmen die Nuten 19', 19'' neben den Tragbolzen 18', 18'' auch die Verriegelungsmittel 32 auf, und die parallelen Flächen 34', 34'' gleiten an der oberen und der unteren Nutwand 24 bzw. 25. Ist der Traggriff 15 bis zum Anschlag an die Wand 28 eingeführt, so kann er nach oben oder unten geschwenkt werden. Dabei kommen die gekrümmten Ränder 35 mit der Innenflächen der zylindrischen Ausnehmung 26b in Eingriff und verhindern eine Verschiebung des Traggriffs 15 in allen Verriegelungspositionen.

Einige dieser Positionen sind in Figur 8 dargestellt. Position II bezeichnet eine Tragstellung in der beide Traggriffe mit einer Hand ergriffen werden können. Position III zeigt eine vertikale Tragestellung, in der zwei Traggriffe beispielsweise von beiden Händen ergriffen werden können. In Position IV befindet sich der Traggriff 15 in der Ruhestellung und ist in den Deckel 12 eingeklappt. Wie auch in der ersten Ausführungsform kann hierbei das Griffelement 16 mit den Seitenwänden 31 zusammenwirken um einen festen Sitz des Traggriffs 15 in der Ruheposition IV zu gewährleisten.

Soll der Traggriff 15 entfernt werden, so wird er wieder in die Entriegelungsposition (I) gebracht und nach außen gezogen.

Auch bei dieser zweiten Ausführungsform wird die Tragfunktion von den Tragbolzen 18', 18'' erfüllt. Die Verriegelungsvorrichtung dient lediglich der Vermeidung einer Verschiebung. Eine bevorzugte Weiterbildung könnte jedoch darin bestehen, daß die in Fig. 7 gestrichelt angedeuteten, mit den Verriegelungsmitteln 32 zusammenwirkenden Seitenbereiche 21' durch eine dickere Ausbildung des Deckels 12 oder eine in Fig. 8 gestrichelt angedeutete Verdickung 21'' von Material überdeckt sind, an dem die Ränder 35 aufgrund einer dazu komplementären Ausbildung der Unterseite des Materials unten entlanggleiten können. Bei dieser Ausführungsform übernehmen in vorteilhafter Weise auch die Verriegelungsmittel 32 einen Teil der Tragfunktion.

Zu Weiterführung dieses Gedankens könnte auch auf die Tragbolzen 18', 18'' ganz verzichtet und deren Funktion vollständig von den vorspringenden Verriegelungsmitteln 32 übernommen werden.

Die beiden oben genannten Ausführungsformen mit jeweils zwei Traggriffen sollen die Erfindung nicht einschränken. Ausführungsformen mit nur einem Traggriff können beispielsweise auf alle gängigen Pkw-Akkumulatoren angewandt werden. Dabei ist von Vorteil, daß die Traggriffausführungen von der Batterielänge unabhängig sind, was einen erheblichen Kostenvorteil gegenüber anderen Grifflösungen schafft, bei denen jeder Traggriff separat an jeden Deckel angepaßt werden muß.

## Patentansprüche

1. Akkumulator mit einem oben durch einen Anschlußpole (13) und vorzugsweise auch Entgasungs- und/oder Nachfüllöffnungen (14) aufweisenden Deckel (12) verschlossenen Gehäuse (11) und mit mindestens einem an dem Deckel (12) schwenkbar befestigten Traggriff (15), welcher ein Griffelement (16), ein sich von diesem zum Deckel (12) erstreckendes Tragkraftübertragungsmittel (17) und Scharniermittel (18) aufweist, die vorzugsweise eine sich parallel zur langen Seite erstreckenden Achse aufweisen und derart gelenkig am Deckel (12) befestigt sind, daß der Traggriff (15) von einer flach auf bzw. in dem Dekkel (12) liegenden Ruheposition in eine hoch geklappte Tragposition und umgekehrt verschwenkbar ist, wobei am Deckel (12) wenigstens eine Scharniermittelhalterung (19', 19" 20, 21) vorgesehen ist, dadurch gekennzeichnet, daß die Scharniermittelhalterung (19', 19'', 20, 21) einen zur Oberfläche des Deckels (12) offenen Durchtrittsschlitz (20), der sich von einem Einführungsbereich (22) zu einem weiter als der Einführungsbereich (22) vom Deckelrand entfernten Tragbereich (21) erstreckt, sowie in den Seitenwänden des Durchtrittsschlitzes (20) ausgebildete und durch Tragstege (23) von der Oberfläche des Deckels (12) getrennte Nuten (19', 19") umfaßt, wobei der Traggriff (15) durch Einschieben der Scharniermittel (18) am Einführungsbereich (22) in die Nuten (19', 19") bis in den Tragbereich (21) lösbar gehalten ist.

2. Akkumulator nach Anspruch 1, dadurch gekennzeichnet, daß das Scharniermittel (18) wenigstens einen sich zumindest im wesentlichen senkrecht zur Tragrichtung erstreckenden Tragbolzen (18', 18'') umfaßt und der Durchtrittsschlitz (20) sich zumindest im wesentlichen horizontal vom zumindest nahe der Mitte des Deckels (12) befindlichen Tragbereich (21) zu weiter außen liegenden Einführungbereich (22) erstreckt, wo die Nuten (19',19") auch nach oben offen sind.

3. Akkumulator nach 1 oder 2, dadurch gekennzeichnet, daß im Tragbereich (21) eine Rastvorrichtung (26a) für den bzw. die Tragbolzen (18', 18'') vorgesehen und der Traggriff (15) im Tragbereich (21) durch Einrasten gegen zufällige Verschiebung gesichert ist.

4. Akkumulator nach Anspruch 3, dadurch gekennzeichnet, daß die Rastvorrichtung durch eine geringfügige Erhöhung (26a) der oberen und/oder unteren Nutwand (24, 25) am Übergang zum Tragbereich (21) gebildet ist.

5. Akkumulator nach Anspruch 1 oder 2, dadurch gekennzeichnet, daß der Traggriff (15) im Bereich der Scharniermittel (18) Verriegelungsmittel (32) aufweist, welche bei Anordnung der Scharniermittel (18) im Tragbereich (21) mit komplementären Verriegelungsgegenmitteln (26b, 33) im Deckel (12) derart zusammenwirken, daß zum Einsetzen und Herausnehmen des Traggriffs (15) eine entriegelte Relativposition der Verriegelungsmittel (32) und der Verriegelungsgegenmittel (26b, 33) und zum Gebrauch des eingesetzten Traggriffs (15) wenigstens eine verriegelte Relativposition der Verriegelungsmittel (32) und der Verriegelungsgegenmittel (26b, 33) vorgesehen ist.

6. Akkumulator nach Anspruch 5, dadurch gekennzeichnet, daß eine entriegelte und mehrere verriegelte Relativpositionen der Verriegelungsmittel (32) und der Verriegelungsgegenmittel (26b, 33) vorgesehen sind.

7. Akkumulator nach einem der Ansprüche 5 oder 6, dadurch gekennzeichnet, daß die Verriegelungsmittel (32) und die Verriegelungsgegenmittel (26b, 33) sich in der Ruhe-(IV) und der bzw. den Tragstellungen (II, III) in der verriegelten Relativposition befinden.

8. Akkumulator nach einem der Ansprüche 5 bis 7, dadurch gekennzeichnet, daß die entriegelte Position der Verriegelungsmittel (32) und der Verriegelungsgegenmittel (26b, 33) bei einer Zwischenstellung des Traggriffs (15) zwischen der Ruhe- (IV) und der bzw. den Tragstellungen (II, III) vorgesehen ist, und zwar vorzugsweise bei nur einem Schwenkwinkel.

9. Akkumulator nach einem der Ansprüche 5 bis 8, dadurch gekennzeichnet, daß die Verriegelungsmittel (32) drehfest im Bereich der Scharniermittel (18) am Traggriff (15) angeordnet sind.

10. Akkumulator nach einem der Ansprüche 5 bis 9, dadurch gekennzeichnet, daß die Verriegelungsgegenmittel (26a, 33) fest und unbeweglich am Deckel (12) angeordnet sind.

11. Akkumulator nach einem der Ansprüche 5 bis 10, dadurch gekennzeichnet, daß die Verriegelungsgegenmittel eine zumindest im wesentlichen zylindrische Ausnehmung (26b, 33) umfassen, deren Umfang den Durchtrittsschlitz (20) und die Nuten (19', 19") erfaßt, deren Achse mit der Achse des Scharniermittels (18) übereinstimmt, deren Breite kleiner ist als die Gesamtbreite des Scharniermittels (18) und die die zu der zylindrischen Ausnehmung (26b) komplementären Verriegelungsmittel (32) verriegelnd aufnehmen kann, welche am Scharniermittel (18) des Traggriffs (15) derart angeordnet und ausgebildet sind, daß sie in der Entriegelungsstellung (I) in den Nuten (19', 19'') verschiebbar sind.

12. Akkumulator nach Anspruch 1 bis 6 oder nach einem der vorhergehenden Ansprüche, dadurch gekennzeichnet, daß das Tragkraftübertragungsmittel aus einem Tragsteg (17) besteht, an dessen Enden T-förmig ein Griffelement (16) bzw. ein Paar von Tragbolzen (18', 18'') vorgesehen ist, die in zwei beidseitig des Durchtrittsschlitzes (20) symmetrisch einander gegenüber angeordneten Nuten (19', 19'') untergebracht sind.

13. Akkumulator nach einem der vorhergehenden Ansprüche, dadurch gekennzeichnet, daß der Tragsteg (17) im heruntergeklappten Zustand des Traggriffs (15) eine solche Höhenerstreckung aufweist, daß er nicht über den Deckel (12) nach oben vorsteht.

14. Akkumulator nach einem der vorhergehenden Ansprüche, dadurch gekennzeichnet, daß in der oberen Fläche des Dekkels (12) zum Griffelement (16) komplementäre Ausnehmungen (27) vorgesehen sind, derart, daß bei in den Deckel (12) zurückgeklapptem Handgriff (15) dieser im Deckel (12) zumindest im wesentlichen versenkt angeordnet ist.

15. Akkumulator nach Anspruch 14, dadurch gekennzeichnet, daß der Traggriff (15) bei in den Deckel (12) eingeklappter Ruheposition (IV) mit von der Mittellängsachse (30) abgewandten Seitenwänden (31) der Ausnehmung (27) für das Griffelement (16) in Eingriff steht.

16. Akkumulator nach Anspruch 14 oder 15, dadurch gekennzeichnet, daß die Ausnehmungen (27) an den Rand des Dekkels (12) angrenzen, derart, daß das dort befindliche Griffelement (16) von der Seite leicht erfaßbar ist.

17. Akkumulator nach einem der vorhergehenden Ansprüche, dadurch gekennzeichnet, daß die Nuten (19', 19'') mit einer zu dem Tragbolzen (18', 18'') komplementären Krümmung enden.

18. Akkumulator nach einem der vorhergehenden Ansprüche, dadurch gekennzeichnet, daß zu beiden Seiten der Mitte des Deckels (12) ein Traggriff (15) mit Nuten (19', 19") und eine Durchtrittsöffnung (20) vorgesehen ist, wobei die Nuten (19', 19'') vorzugsweise untereinander ausgerichtet sind.

19. Akkumulator nach einem der vorhergehenden Ansprüche, dadurch gekennzeichnet, daß der Durchtrittsschlitz (20) innen an einer im wesentlichen von innen nach außen derart schräg ansteigenden Wand (28) mündet, daß die beiden Traggriffe über die senkrechte hinaus soweit nach innen verschwenkbar sind, daß sie von einer Hand ergreifbar sind.

20. Akkumulator nach einem der Ansprüche 5 bis 19, dadurch gekennzeichnet, daß die Verriegelungsmittel (32) zusätzlich zu dem Scharniermittel (18) vorgesehen sind.

21. Akkumulator nach Anspruch 20, dadurch gekennzeichnet, daß die Verriegelungsmittel (32) in Verbindung mit dem Verriegelungsgegenmitteln (26b, 21") zusätzlich zu dem Scharniermittel (18) als Tragteil ausgebildet sind.

22. Akkumulator nach einem der Ansprüche 5 bis 19, dadurch gekennzeichnet, daß statt der Tragbolzen (18', 18'') nur Verriegelungsmittel (32) vorgesehen sind, die zusätzlich zu ihrer Verriegelungsfunktion die Tragfunktion der Tragbolzen (18', 18") übernehmen, indem an ihnen vorgesehene Riegelränder.bzw. -flächen (35) sich in der bzw. den Tragstellungen (II, III) im wesentlichen oben befinden und Material des Deckels (12) von unten im Gleitsitz untergreifen.

23. Akkumulator nach einem der Ansprüche 5 bis 23,
dadurch **gekennzeichnet**,
daß die Verriegelungsmittel (32) als zwei diametral gegenüberliegende radiale Vorsprünge ausgebildet sind, die jeweils zwei parallele, radial und axial ausgerichtete Ebenen (34', 34") umfassen, welche den gleichen Abstand aufweisen wie die oberen (24) und unteren (25) Wände der Nuten (19', 19"), so daß der Traggriff (15) nur in der Entriegelungsstellung (I) zwischen Einführungsbereich (22) und Tragbereich (21) in den Nuten (19', 19") verschiebbar und somit nur mit im Tragbereich (21) angeordneten Verriegelungsmitteln (32) in eine Tragstellung (II, III) bzw. eine Ruhestellung (IV) schwenkbar ist.

24. Traggriff mit einem Griffelement (16), einem Tragkraftübertragungsmittel (17) und einem Scharniermittel (18),
dadurch **gekennzeichnet,**
daß das Scharniermittel (18) komplementär zur Scharniermittelhalterung (19', 19", 20, 21) des Akkumulators nach einem der vorhergehenden Ansprüche ausgebildet ist.

## Claims

1. Accumulator having a housing which is closed at the top by a cover (12) having connection poles (13) and preferably also venting and/or top up openings (14) and having at least one carrying handle (15) pivotally secured to the cover (12) and having a handle element (16), a carrying force transmission means (17) extending from the handle element to the cover (12) and hinge means (18) which preferably have an axis extending parallel to the long side and being pivotally secured to the cover (12) in such a way that the carrying handle (15) can be pivoted from a rest position lying flat on the or in the cover (12) into a upwardly pivoted carrying position and vice versa, with at least one hinge means holder (19', 19", 20, 21) being provided at the cover (12), characterised in that the hinge means holder (19', 19", 20, 21) has an open passage slot (20) which extends from an insertion region (22) to a carrying region (21) further removed from the edge of the cover than the insertion region (22) and also includes separate grooves (19', 19") formed in side walls of the passage slot (20) and separated by carrying webs (23) from the surface of the cover (12), with the carrying handle (15) being releasably held by pushing the hinge means (18) at the insertion region (22) into the grooves (19', 19") up to the carrying region (21).

2. Accumulator in accordance with claim 1, characterised in that the hinge means (18) include at least one carrying pin (18', 18") which extends substantially perpendicular to the carrying direction and in that the passage slot (20) extends at least substantially horizontally from the carrying region (21) located at least close to the centre of the cover (12) to the further outwardly disposed insertion region (22), where the grooves (19', 19") are also open to the top.

3. Accumulator in accordance with claim 1 or claim 2, characterised in that a latch device (26a) is provided in the carrier region (21) for the carrying pin or the carrying pins (18', 18") and the carrying handle (15) is secured in the carrying region (21) against chance displacement by latching it into place.

4. Accumulator in accordance with claim 3, characterised in that the latch device is formed by a slight elevation (26a) of the upper and/or lower groove (24, 25) at the transition to the carrying region (21).

5. Accumulator in accordance with claim 1 or claim 2, characterised in that the carrying handle (15) has latching means (32) in the region of the hinge means (18), with the latching means co-operating with complementary counterlatching means (26b, 33) in the cover (12) when the hinge means (18) are arranged in the carrying region (21) in such a way that for the insertion and removal of the carrying handle (15) a delatched relative position of the latching means (32) and of the counterlatching means (26b, 33) is provided, and for the use of the inserted carrying handle (15) at least one latched relative position of the latching means (32) and of the counterlatching means (26b, 33) is provided.

6. Accumulator in accordance with claim 5, characterised in that a delatched relative position and a plurality of latched relative positions of the latching means (32) and of the counterlatching means (26b, 33) are provided.

7. Accumulator in accordance with one of the claims 5 or claim 6, characterised in that the latching means (32) and the counterlatching means (26b, 33) are located in the rest position (IV) and in the carrying position or carrying positions (II, III) in the latched relative position.

8. Accumulator in accordance with one of the claims 5 to 7, characterised in that the delatched position of the latching means (32) and of the counterlatching means (26b, 33) is provided in an intermediate position of the carrying handle (15) between the rest position (IV) and the carrying position or carrying positions (II, III), and indeed preferably at only one pivot angle.

9. Accumulator in accordance with one of the claims 5 to 8, characterised in that the latching means (32) is rotationally fixedly arranged on the handle (15) in the region of the hinge means (18).

10. Accumulator in accordance with one of the claims 5 to 9, characterised in that the counterlatching means (26a, 33) are fixedly and unmovably arranged on the cover (12).

11. Accumulator in accordance with one of the claims 5 to 10, characterised in that the counterlatching means includes an at least substantially cylindrical cut-out (26b, 33), the periphery of which includes the passage slot (20) and the grooves (19', 19") and the axis of which corresponds with the axle of the hinge means (18), the width of which is smaller than the total width of the hinge means (18), and which can latchingly accommodate the latching means (32) complementary to the cylindrical cut-out (26b), which are arranged and formed at the hinge means (18) of the carrying handle (15) in such a way that they are displaceable in the latched position (I) into the grooves (19', 19").

12. Accumulator in accordance with claim 1 to 6, or in accordance with one of the preceding claims, characterised in that the carrying force transmission means consists of a carrying web (17) at whose ends a handle element (16) or a pair of carrying pins (18', 18") are provided in T-shaped manner, which are accommodated in two symmetrically and oppositely disposed grooves (19', 19") on both sides of the passage slot (20).

13. Accumulator in accordance with one of the preceding claims, characterised in that the carrier web (17) has a vertical extent in the downwardly pivoted state of the carrying handle (15), which does not project upwardly beyond the cover (12).

14. Accumulator in accordance with one of the preceding claims, characterised in that recesses (27) complementary to the handle element (16) are provided in the upper surface of the cover (12) in such a way that with the handle (15) folded back into the cover (12) the handle is at least substantially sunk within the cover (12).

15. Accumulator in accordance with claim 14, characterised in that the handle (15) stands , when pivoted into the cover (12), in the rest position (IV) in engagement with side walls (31) of the recess (27) for the handle element (16) remote from the central longitudinal axis (30).

16. Accumulator in accordance with claim 14 or claim 15, characterised in that the recesses (27) border on the edge of the cover (12) in such a way that the handle element (16) located there can easily be grasped from the sides.

17. Accumulator in accordance with one of the preceding claims, characterised in that the grooves (19', 19") end with a curvature complementary to the carrying pin (18', 18").

18. Accumulator in accordance with one of the preceding claims, characterised in that a carrying handle (15) with grooves (19', 19") and a passage opening (20) is provided on both sides of the centre of the cover (12), with the grooves (19', 19") preferably being aligned with one another.

19. Accumulator in accordance with one of the preceding claims, characterised in that the passage slot (20) opens inwardly at a wall (28) which rises substantially from the inside to the outside in an oblique manner such that the two carrying handles are pivotable beyond the vertical position and also so far inwardly that they can be grasped by a hand.

20. Accumulator in accordance with one of the claims 5 to 19, characterised in that the latching means (32) are provided in addition to the hinge means (18).

21. Accumulator in accordance with claim 20, characterised in that the latching means (32) in connection with the counterlatching means (26b, 21") are formed as the carrying part in addition to the hinge means (18).

22. Accumulator in accordance with one of the claims 5 to 19, characterised in that only latching means (32) are provided in place of the carrying pins (18', 18") and adopt, in addition to their latching function, the carrying function of the carrying pins (18', 18") in that latching edges or surfaces (35) provided on them are disposed substantially upwardly in the carrying position or carrying positions (II, III) and engage in a sliding seat beneath the material of the cover (12).

23. Accumulator in accordance with one of the claims 5 to 23, characterised in that the latching means (32) are formed as two diametrically oppositely disposed radial projections which respectively include two parallel, radially and axially aligned planes (34', 34"), which have the same spacing as the upper (24) and lower (25) walls of the grooves (19', 19"), so that the carrying handle (15) is only displaceable in the unlatched position (I) in the grooves (19', 19") between the insertion region (22) and the carrying region (21) and thus can only be pivoted with latching means (32) arranged in the carrying region into a carrying position (II, III) or into a rest position (IV).

24. Carrying handle with a handle element (16), a carrying force transmission means (17) and a hinge means (18), characterised in that the hinge means (18) is formed complementary to the hinge means holder (19', 19", 20, 21) of the accumulator in accordance with one of the preceding claims.

## Revendications

1. Accumulateur comprenant un boîtier (11) refermé en haut par un couvercle (12) traversé par une borne de raccordement (13) et présentant également de préférence des ouvertures (14) de dégazage et/ou de remplissage, et comprenant au moins une poignée de transport (15) fixée en basculement sur le couvercle (12), laquelle comporte un élément de saisie (16), un organe de transmission de force (17) qui s'étend depuis ledit élément de saisie jusqu'au couvercle (12), et des organes formant charnière (18), qui présentent de préférence un axe parallèle aux côtés allongés, et sont fixés de telle manière en articulation sur le couvercle (12) que la poignée de transport (15) peut être basculée depuis une position de repos à plat sur ou dans le couvercle (12), jusque dans une position de transport redressée, ou inversement, dans lequel est prévue sur le couvercle (12) au moins une monture (19', 19", 20, 21) pour les organes de charnière, caractérisé en ce que la monture (19', 19", 20, 20) des organes de charnière comporte une fente traversante (20) ouverte vers la surface du couvercle (12), qui s'étend depuis une région d'introduction (22) jusqu'à une région de transport (21) plus éloignée de la bordure du couvercle que la région d'introduction (22), ainsi que des gorges (19', 19") ménagées dans les parois latérales de la fente traversante (20) et séparées de la surface du couvercle (12) par des barrettes de transport (23), et la poignée de transport (15) est maintenue de façon détachable par introduction des organes de charnière (18) au niveau de la région d'introduction (22) dans les gorges (19', 19") jusque dans la région de transport (21).

2. Accumulateur selon la revendication 1, caractérisé en ce que les organes de charnière (18) comprennent au moins un goujon de transport (18', 18") qui s'étend au moins sensiblement perpendiculairement à la direction de transport, et en ce que la fente traversante (20) s'étend au moins sensiblement horizontalement depuis la région de transport (21) située au moins à proximité du milieu du couvercle (12) jusqu'à la région d'introduction (22) située plus vers l'extérieur, où les gorges (19', 19") sont également ouvertes vers le haut.

3. Accumulateur selon l'une ou l'autre des revendications 1 et 2, caractérisé en ce que dans la région de transport (21) est prévu un dispositif d'enclenchement (26a) pour le ou les goujons de transport (18', 18"), et en ce que la poignée de transport (15) est protégée à l'encontre d'un déplacement accidentel par enclenchement dans la région de transport (21).

4. Accumulateur selon la revendication 3, caractérisé en ce que le dispositif d'enclenchement est formé par une légère bosse (26a) de la paroi supérieure et/ou inférieure de gorge (24, 25) à la transition vers la région de transport (21).

5. Accumulateur selon l'une ou l'autre des revendications 1 et 2, caractérisé en ce que la poignée de transport (15) comporte dans la région des organes de charnière (18) des organes de verrouillage (32) qui, lors de l'agencement des organes de charnière (18) dans la région de transport (21) coopèrent avec des organes de verrouillage complémentaires (26b, 33) dans le couvercle (12) de telle manière que pour mettre en place et sortir la poignée de transport (15) il est prévu une position relative déverrouillée des organes de verrouillage (32) et des organes de verrouillage complémentaires (26b, 33), et pour l'utilisation de la poignée de transport en place (15) il est prévu au moins une position relative verrouillée des organes de verrouillage (32) et des organes de verrouillage complémentaires (26b, 33).

6. Accumulateur selon la revendication 5, caractérisé en ce qu'il est prévu une position relative déverrouillée et plusieurs positions relatives verrouillées des organes de verrouillage (32) et des organes de verrouillage complémentaires (26b, 33).

7. Accumulateur selon l'une ou l'autre des revendications 5 et 6, caractérisé en ce que les organes de verrouillage (32) et les organes de verrouillage complémentaires (26b, 33) se trouvent dans la position de repos (IV), et en ce qu'ils se trouvent dans la ou les positions relatives verrouillées dans les positions de transport (II, III).

8. Accumulateur selon l'une quelconque des revendications 5 à 7, caractérisé en ce que la position déverrouillée des organes de verrouillage (32) et des organes de verrouillage complémentaires (26b, 33) est prévue à une position intermédiaire de la poignée de transport (15) entre la position de repos (IV) et la ou les positions de transport (II, III), et ceci de préférence pour un seul angle de basculement.

9. Accumulateur selon l'une quelconque des revendications 5 à 8, caractérisé en ce que les organes de verrouillage (32) sont agencés de façon solidaire en rotation sur la poignée de transport (15) dans la région des organes de charnière (18).

10. Accumulateur selon l'une quelconque des revendications 5 à 9, caractérisé en ce que les organes de verrouillage complémentaires (26a, 33) sont agencés de manière fixe et immobile sur le couvercle (12).

11. Accumulateur selon l'une quelconque des revendications 5 à 10, caractérisé en ce que les organes de verrouillage complémentaires présentent un évidement au moins sensiblement cylindrique (26b, 33), dont la périphérie englobe la fente traversante (20) et les gorges (19', 19"), dont l'axe coïncide avec l'axe des organes de charnière (18), dont la largeur est inférieure à la largeur totale des organes de charnière (18), et qui peut loger en verrouillage les organes de verrouillage complémentaires (32) à l'évidement cylindrique (26b), lesdits organes de verrouillage complémentaires (32) étant agencés sur les organes de charnière (18) de la poignée de transport (15) de telle manière, et étant réalisés de telle façon qu'ils peuvent être déplacés en position de déverrouillage (I) dans les gorges (19', 19").

12. Accumulateur selon les revendications 1 à 6, ou selon l'une quelconque des revendications précédentes, caractérisé en ce que les moyens de transmission de force sont formés par une barrette de transport (17) aux extrémités de laquelle est prévu un élément de saisie en forme de T (16), ou une paire de goujons de transport (18', 18"), qui sont reçus dans deux gorges (19', 19") agencées symétriquement en opposition l'une de l'autre des deux côtés de la fente traversante (20).

13. Accumulateur selon l'une quelconque des revendications précédentes, caractérisé en ce que la barrette de transport (17) présente, dans l'état rabattu de la poignée de transport (15) une telle étendue en hauteur qu'elle ne dépasse pas au-dessus du couvercle (12).

14. Accumulateur selon l'une quelconque des revendications précédentes, caractérisé en ce que dans la surface supérieure du couvercle (12) vers l'élément de saisie (16) sont prévus des évidements complémentaires (27), de manière que lorsque la poignée (15) est rabattue dans le couvercle (12) celle-ci est agencée de manière au moins sensiblement en renfoncement dans le couvercle (12).

15. Accumulateur selon la revendication 14, caractérisé en ce que la poignée de transport (15), dans la position de repos (IV) rabattue dans le couvercle (12), se trouve en engagement avec des parois latérales (31), détournées de l'axe longitudinal médian (30), de l'évidement (27) pour l'élément de saisie (16).

16. Accumulateur selon l'une ou l'autre des revendications 14 et 15, caractérisé en ce que les évidements (27) sont limitrophes de la bordure du couvercle (12), de sorte que l'on peut aisément engager depuis le côté l'élément de saisie (16) qui s'y trouve.

17. Accumulateur selon l'une quelconque des revendications précédentes, caractérisé en ce que les gorges (19', 19") se terminent avec une courbure complémentaires aux goujons de transport (18', 18").

18. Accumulateur selon l'une quelconque des revendications précédentes, caractérisé en ce que des deux côtés du milieu du couvercle (12) est prévue une poignée de transport (15) avec des gorges (19', 19") et une ouverture traversante (20), les gorges (19', 19") étant de préférence alignées les unes par rapport aux autres.

19. Accumulateur selon l'une quelconque des revendications précédentes, caractérisé en ce que la fente traversante (20) débouche sur une paroi (28) inclinée en montant sensiblement depuis l'intérieur vers l'extérieur, de manière que les deux poignées de transport sont susceptibles d'être basculées au-delà de la verticale aussi loin vers l'intérieur que l'on peut les saisir d'une seule main.

20. Accumulateur selon l'une quelconque des revendications 5 à 19, caractérisé en ce que les organes de verrouillage (32) sont prévus en supplément des organes de charnière (18).

21. Accumulateur selon la revendication 20, caractérisé en ce que les organes de verrouillage (32) en combinaison avec les organes de verrouillage complémentaires (26b, 21") sont réalisés en supplément des organes de charnière (18), sous forme d'une partie de transport.

22. Accumulateur selon l'une quelconque des revendications 5 à 19, caractérisé en ce que l'on prévoit au lieu des goujons de transport (18', 18") uniquement des organes de verrouillage (32) qui remplissent en plus de leur fonction de verrouillage la fonction de support des goujons de transport (18', 18"), du fait que des bordures de verrouillage ou surfaces de verrouillage (35) prévues sur eux-mêmes sont situées sensiblement en haut dans la ou les positions de transport (II, III), et engagent de façon coulissante depuis le dessous le matériau du couvercle (12).

23. Accumulateur selon l'une quelconque des revendications 5 à 23, caractérisé en ce que les organes de verrouillage (32) sont réalisés sous forme de deux saillies radiales en opposition diamétrale, qui englobent respectivement deux plans parallèles (34', 34"), alignés radialement et axialement, lesdits plans présentant la même distance que les parois supérieure (24) et inférieure (25) des gorges (19', 19"), de sorte que la poignée de transport (15) ne peut être introduite entre la région d'introduction (22) et la région de transport (21) dans les gorges (19', 19") que dans la position de déverrouillage (I), et qu'elle ne peut donc être basculée jusque dans une position de transport (II, III) ou dans une position de repos (IV) que lorsque les organes de verrouillage (32) sont agencés dans la région de transport (21).

24. Poignée de transport comprenant un élément de saisie (16), des organes de transmission de force (17), et des organes formant charnière (18), caractérisée en ce que les organes formant charnière (18) sont réalisés de manière complémentaire à la monture (19', 19", 20, 21) des organes de charnière de l'accumulateur selon l'une quelconque des revendications précédentes.
